# EUROPEAN PATENT APPLICATION

(11) **EP 4 067 233 A1**
(43) Date of publication of application: **05.10.2022**
(21) Application number: 22164319.0
(22) Date of filing: 25.03.2022
(51) Int. Cl.: B64D 11/04, B64D 11/06, B64D 11/00

(54) **AIRCRAFT STOWAGE UNIT**

(30) Priority: 29.03.2021 GB 202104435
(71) Applicant: AIM Altitude Limited, Christchurch Dorset BH23 6BU (GB); AVIC Cabin Systems Co., Limited, Hong Kong SAR (China) (CN)
(72) Inventor: BURNS, Ross, Christchurch, BH23 6BU (GB); JACOBS, Andrew, Christchurch, BH23 6BU (GB); TEICHRIB, Helena, Christchurch, BH23 6BU (GB)
(74) Representative: D Young & Co LLP

(57) **Abstract**

The present disclosure relates to an aircraft stowage unit configured to provide a footwell for an adjacent seating unit.

## Description

### BACKGROUND

### Field of the Disclosure

The present disclosure relates to an aircraft stowage unit.

### Description of the Related Art

The "background" description provided is for the purpose of generally presenting the context of the disclosure. Work of the presently named inventors, to the extent it is described in the background section, as well as aspects of the description which may not otherwise qualify as prior art at the time of filing, are neither expressly or impliedly admitted as prior art against the present disclosure.

There is growing demand for air travel and, as a result, airlines desire to increase the seating capacity of existing aircraft. The space available on an aircraft is limited and an aircraft must include stowage in addition to the passengers themselves, for example to store suitable equipment for passenger comfort and safety.

This is particularly the case with modern aircraft where engine efficiency means smaller aircraft can travel longer distances. Accordingly, due to extended durations more meals and on-board service for the passengers is required to be stowed in a smaller aircraft cabin.

It is therefore desirable to reduce the footprint of this stowage and minimise wasted space on the aircraft.

Free space may also be created on the aircraft by utilising the available space more efficiently. This free space may then be used to seat additional passengers and therefore increase the seating capacity of the aircraft.

This disclosure aims to at least address one of the above problems.

### SUMMARY

The present disclosure is defined by the claims.

### BRIEF DESCRIPTION OF THE DRAWINGS

Non-limiting embodiments and advantages of the present disclosure will be best understood by reference to the following detailed description taken in conjunction with the accompanying drawings, wherein:
Fig. 1 shows a known arrangement of an aircraft stowage unit and an adjacent seating unit.
Fig. 2 shows a stowage unit and an adjacent seating unit according to embodiments of the present disclosure.
Fig. 3 shows the front surface of the stowage unit according to embodiments.
Fig. 4 shows the aft face and the aisle surface of the stowage unit according to embodiments.
Fig. 5a and 5b show schematic diagrams of the stowage unit and the adjacent seating unit according to embodiments.
Fig. 6 shows an arrangement including the stowage unit, the adjacent seating unit and a second stowage unit according to an embodiment.
Fig. 7 shows an arrangement including the stowage unit and a plurality of seating units according to an embodiment.

Like reference numerals designate identical or corresponding parts throughout the drawings.

### DETAILED DESCRIPTION OF THE EMBODIMENTS

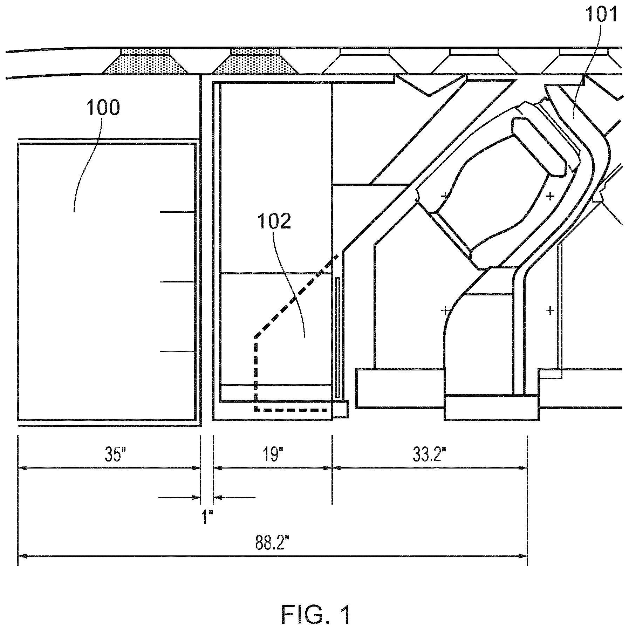

Fig. 1 shows a known arrangement of an aircraft stowage unit 100 and an adjacent seating unit 101. Between the aircraft stowage unit 100 and the adjacent seating unit 101 is a footwell 102. The adjacent seating unit 101 includes a seat, and the footwell 102 is positioned alongside the adjacent seating unit 101 such that a passenger seated in the adjacent seating unit 101 would be able to place their feet in the footwell 102. The remaining space between the aircraft stowage unit 100 and the adjacent seating unit 101 is not utilised in a manner necessary for the function of the aircraft and/or comfort of the passenger and is therefore wasted. For example, the space above the footwell 102 is not being used for stowage or otherwise.

In this arrangement, the length of the stowage unit 100 when measured along the direction parallel to the longitudinal axis of the aircraft (the 'longitudinal length') is 35" (89 cm). The longitudinal length of the total space incorporating the stowage unit 100, the footwell 102 and the remaining wasted space between the stowage unit 100 and the adjacent seating unit 101 is 55" (139.7 cm).

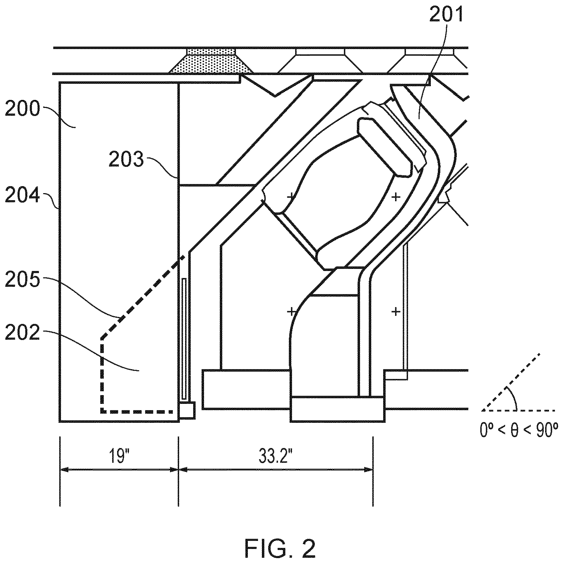

Fig. 2 shows a stowage unit 200 and an adjacent seating unit 201 according to embodiments of the present disclosure. The adjacent seating unit 201 includes a seat, and the stowage unit 200 includes a footwell 202. The footwell 202 is provided for the adjacent seating unit 201 such that a passenger seated in the adjacent seating unit 201 would be able to place their feet in the footwell 202. The stowage unit 200 comprises a front surface 203 and a back surface 204, wherein the front surface 203 faces towards the adjacent seating unit 201 and back surface 204 faces away from the adjacent seating unit 201. In embodiments, the front surface 203 faces towards the adjacent seating unit 201 such that the direction of the surface normal intersects with the adjacent seating unit 201 and the back surface 204 faces away from the adjacent seating unit 201 such that the direction of the surface normal does not intersect with the adjacent seating unit 201. The two surfaces may face in opposite directions parallel to the longitudinal axis of the aircraft but are not limited in this regard.

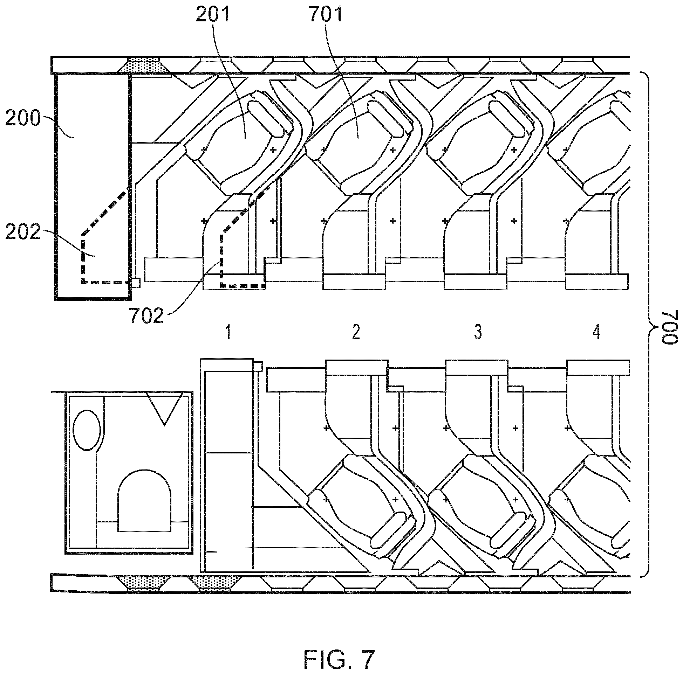

In an embodiment, the stowage unit 200 is 19" (48cm) in length when measured along the direction parallel to the longitudinal axis of the aircraft. The stowage unit 200 including the footwell 202 therefore represents, in embodiments, a 36" (91.4 cm) reduction in space longitudinally in comparison to the stowage unit 100, the footwell 102 and the remaining wasted space between the stowage unit 100 and the adjacent seating unit 101 in the known arrangement of Fig. 1. Therefore, in embodiments, 36" of free space is created in the direction parallel to the longitudinal axis of the aircraft by incorporating the footwell 202 in the stowage unit 200. In the present embodiment this amount of created space could be used to incorporate an additional seating unit identical to the adjacent seating unit 201 and therefore increase the seating capacity of the aircraft. This is discussed in more detail in relation to Fig. 7. However, the present disclosure is not limited in this regard and other longitudinal lengths may be used. For example, the longitudinal length of the stowage unit 200 may be up to 70 cm in order to increase the amount of space available to the stowage unit whilst still saving space on the aircraft. In another example, the longitudinal length of the stowage unit 200 may be less than 60 cm in order to further save space on the aircraft. In yet another example, the longitudinal length of the stowage unit 200 may be less than 50 cm in order to further save space on the aircraft. By combining these units the seats may be moved forward to add more seating capacity in business class, premium economy or economy class, larger seats, larger toilet facilities to assist access or more stowage or the like. Moreover, more meal or service boxes may be added which improves the in-flight experience for passengers. In addition, by combining the units, one footprint is created having two purposes. This reduces the weight of the monument and only one unit rather than two needs to be purchased.

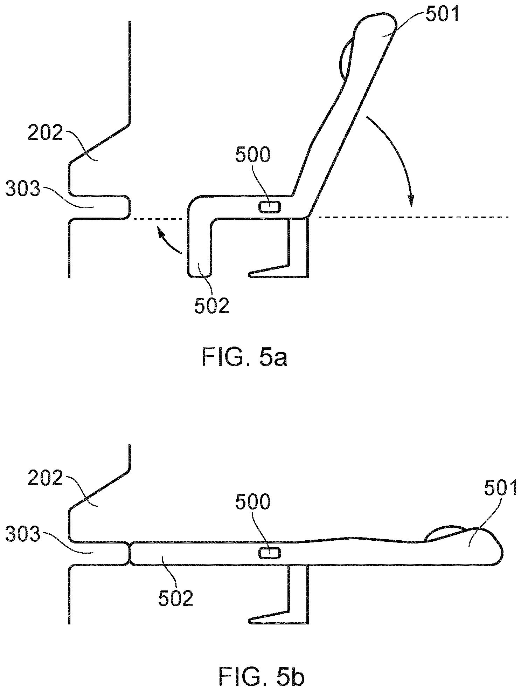

In an embodiment, the adjacent seating unit 201 is configured such that the longitudinal axis of the seat is positioned at an acute angle to the longitudinal axis of the aircraft. This allows a plurality of identical seating units to be arranged alongside each other such that wasted space is reduced (see Fig. 7). For example, in arrangements of business class seating units where the seat of each unit is capable of reclining to a horizontal position (see Fig. 5) this configuration utilises the available space efficiently. In this embodiment, if the stowage unit 200 is positioned such that the front surface 203 faces in a direction parallel to the longitudinal axis of the aircraft, the longitudinal axis of the seat of the adjacent seating unit 201 will therefore be positioned at an acute angle to the front surface 203.

The footwell 202 included in the stowage unit 200 may have a shape that minimises the space taken up by the footwell 202 whilst ensuring that a passenger seated in the adjacent seating unit 201 would still be able to place their feet in the footwell 202. This reduces wasted space on the aircraft and allows more space in the stowage unit 200 to be used for stowage, allowing the total volume of the stowage unit 200 to be reduced. For example, the footwell 202 may include an inner surface 205 positioned at the same angle to the longitudinal axis of the aircraft as the angle of the seat of the adjacent seating unit 201.

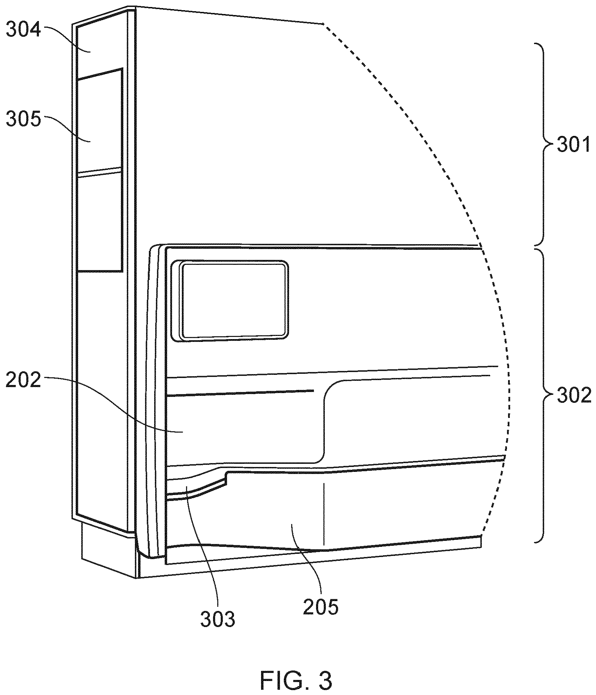

Fig. 3 shows the forward face 203 of the stowage unit 200 according to embodiments. The stowage unit 200 includes an upper section 301 and a lower section 302, wherein the lower section 302 is attached to the floor of the aircraft and arranged vertically below the upper section 302. The lower section includes the footwell 202. Since the upper section 301 of the stowage unit 200 comprises more space that can be used for stowage rather than taking up the footwell 202, the upper section 301 may be configured to include different functional units to the lower section in order to utilise the available space efficiently. Of course, although the embodiments of Fig. 3 shows the upper section 301 being placed vertically above the lower section 302, the disclosure is not so limited and may be horizontally displaced relative to the lower section 302.

In Fig. 3 it can also be seen that the inner surface 205 of the footwell 202 is positioned at an acute angle to the front surface 203, in order to improve the efficiency of space utilisation as described above. The footwell 202 further includes a step or foot rest cushion 303 that is elevated from the floor of the aircraft such that a passenger seated in the adjacent seating unit 201 would be able to place their feet on the step or foot rest cushion 303 in order to be more comfortable.

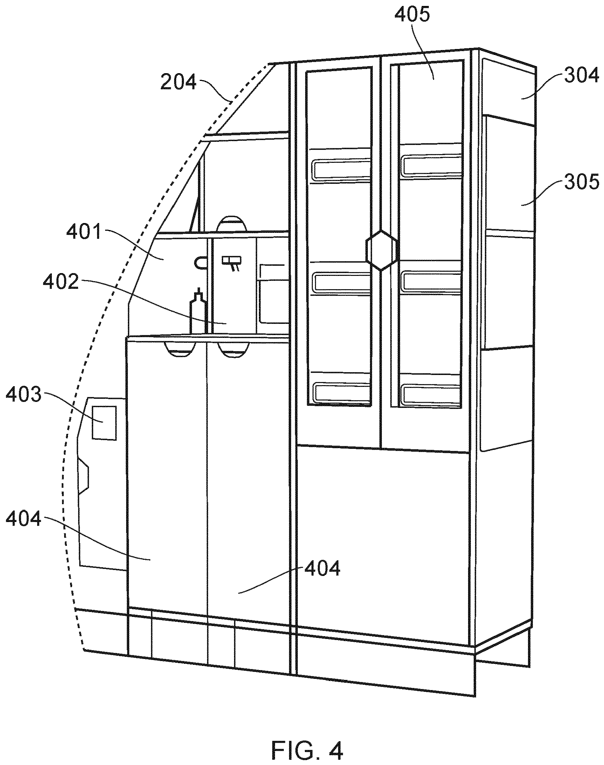

Fig. 3 also shows an aisle surface 304 of the stowage unit 200, wherein the aisle surface 304 is an outside surface of the stowage unit 200 that faces towards the aisle of the aircraft such that it is accessible from the aisle. In an embodiment, the aisle surface 304 includes a display panel 305. The display panel 305 may allow a user to interact with and/or receive information regarding the contents of the stowage unit 200. Examples are described in more detail with regard to Fig. 4 below.

Fig. 4 shows the back surface 204 and the aisle surface 304 of the stowage unit 200 according to an embodiment in which the stowage unit 200 is a galley unit.

The preparation and storage of food and drink is essential on aircrafts where a meal and/or refreshment service is provided to passengers, and therefore space efficiency is desirable for galley units containing the equipment and storage space necessary for such preparation and/or storage. For example, on long-haul flights more space is needed for such galley units due to an increase in meal and/or refreshment services but it is still desirable to maximise seating capacity. It may be particularly desirable for a galley unit to be located close to seating units, such as in the present embodiment, so that the meal and/or refreshment services are more readily accessible to the seated passengers (for example when the seating units are first class or business class seating units).

In the embodiment shown in Fig. 4, the galley unit comprises a sink 401 to allow airline staff to wash their hands and maintain hygiene standards, a drink preparation unit 402 for preparing beverages, a trash stowage area 403 for storing trash, a cart stowage area 404 for storing one or more airline food carts and a refrigerated unit 405 for storing food and/or drink. However, the present disclosure is not limited in this regard and the galley unit may contain other functional components typical of an aircraft galley unit, such as a meal preparation unit for preparing passenger meals and/or a heated unit for storing food and/or drink. Such components may be arranged in either the upper section 301 or the lower section 302 of the stowage unit 200 in order to utilise the available space in the stowage unit 200 efficiently. The chilled cabinet 405 may be designed to receive airline cart food containers such as those described in US Patent Application No. 16/820,234, the contents of which is hereby incorporated by reference.

In this embodiment, the display panel 305 may allow a user to interact with and/or receive information regarding the contents of the galley unit. For example, the display panel 305 may allow a user to view or change the temperature of the chilled cabinet 405, to view the current capacity of the chilled cabinet 405 or to operate the drink preparation area 402. However, the present disclosure is not limited in this regard and the display panel 305 may allow a user to interact with and/or receive information regarding the components shown in Fig. 4 in any other suitable manner. The display panel 305 may also allow a user to interact with and/or receive information regarding other functional components contained by the galley unit not shown in Fig. 4, such as allow a user to change the temperature of a heated cabinet for storing food and/or drink. In other embodiments the aisle surface 304 may include other functional components typical of an aircraft galley unit instead of or in addition to the display panel, for example a lighting component (e.g. an LED strip) to light the aircraft. Such a lighting component may be low-level lighting suitable for being used to light the aircraft during a designated 'night' period during the flight, and may be positioned at a vertical distance up to 15 cm from the base of the stowage unit in order to indicate where the edge of the aisle is located.

Fig. 5a and Fig. 5b show schematic diagrams of the stowage unit 200 and the adjacent seating unit 201 according to embodiments. The adjacent seating unit 201 includes controls 500 configured to allow the seat to recline when operated. The controls 500 may cause the seat to move into a substantially horizontal position or allow the seat to be moved into such a position by a user. The controls 500 may be located anywhere on the adjacent seating unit 201 where they are easily accessible to a passenger seated in the adjacent seating unit and/or a member of airline staff standing in the aircraft aisle, for example on one side of the seat as shown. Of course, the location of the controls 500 may be different. For example, in embodiments, the seat controls may be found on a console touch screen instead of on the seat or may be located anywhere within the adjacent seating unit 201.

In Fig. 5a the seat is configured in an upright position such that a seated passenger would be able to sit upright with their back supported. The arrows and dashed lines indicate how sections of the seat may be configured to move when the controls 500 are operated: a backrest section 501 is able to pivot about the seat base until reaching a substantially horizontal position, and a front section 502 is able to pivot about the seat base until reaching a substantially horizontal position.

Fig. 5b shows the seat configured in a substantially horizontal position such that a seated passenger would be able to lie horizontally on the seat and thus use it as a bed. The backrest section 501 and front section 502 of the seat are both in a substantially horizontal position in this configuration. In this embodiment the stowage unit 200 is configured such that the step 303 of the footrest 202 is positioned at approximately the same height from the floor of the aircraft as the seat of the adjacent seating unit 201 when the seat is in the substantially horizontal position. As a result, when the seat is in the substantially horizontal position the front section 502, the base of the seat and the backrest section 501 all lie in line with the step 303 of the footrest 202 such that a passenger using the seat as a bed would be able to place their feet on the step or foot rest cushion 303. The step or foot rest cushion 303 acts to extend the length of the seat by forming part of the bed surface when the seat is in the substantially horizontal position, providing a greater surface area for the passenger to lie on. Passenger comfort is therefore improved without increasing the length of the adjacent seating unit, saving space on the aircraft.

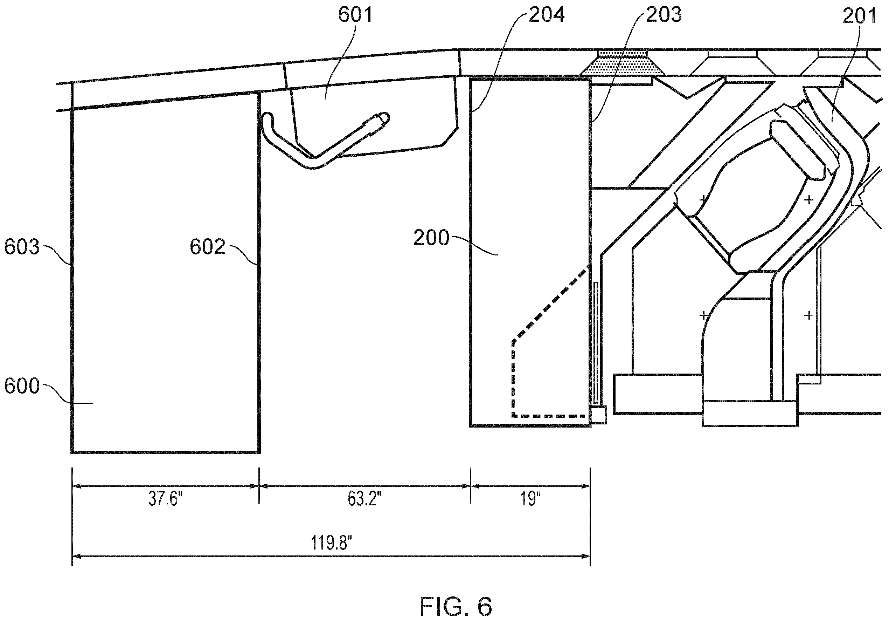

Fig. 6 shows an arrangement according to embodiments including the stowage unit 200, the adjacent seating unit 201 and a second stowage unit 600. The stowage unit 200 and second stowage unit 600 are separate units and positioned relative to each other such that there is a space between them. This space may be unoccupied and used as a passageway to ensure easy access to the stowage unit 200, the second stowage unit 600 and/or an aircraft door 601 as shown. However, the present disclosure is not limited in this regard and the space may be utilised in any suitable manner by the aircraft in order to avoid wasting space.

In the embodiment shown in Fig. 6 the second stowage unit 600 is positioned on another side of the stowage unit 200 to the adjacent seating unit 201, such that the front surface 203 of the stowage unit 200 facing towards the adjacent seating unit 201 also faces away from the second stowage unit 600 and the back surface 204 facing away from the adjacent seating unit 201 also faces towards the second stowage unit 600. The second stowage unit 600 itself comprises a front surface 602 and a back surface 603, wherein the front surface 602 faces towards the stowage unit 200 and back surface 603 faces away from the stowage unit 200. The front surface 602 and back surface 603 face in opposite directions parallel to the longitudinal axis of the aircraft in this embodiment but the present disclosure is not limited in this regard.

In Fig. 6, the longitudinal length of the second stowage unit 600 is 37.6" (95.5 cm). The total distance measured along the direction parallel to the longitudinal axis of the aircraft (the 'longitudinal distance') between the front surface 203 of the stowage unit 200 and the back surface 603 of the second stowage unit 600, including the space between, is 119.8" (304.3 cm). However, the present disclosure is not limited in this regard and other longitudinal lengths may be used. For example, the total longitudinal distance between the front surface 203 of the stowage unit 200 and the back surface 603 of the second stowage unit 600 may be reduced to less than 260 cm in order to save additional space on the aircraft, by reducing the longitudinal length of stowage unit 600 and/or the space between the two stowage units. In another example, this total longitudinal distance may be less than 245 cm (e.g. 237 cm, or 93.4") in order to further save space on the aircraft.

Fig. 7 shows the stowage unit 200 and a plurality of seating units 700 according to embodiments. The plurality of seating units 700 comprises a number of identical seating units arranged alongside each other such that they form two columns with a single aisle of unoccupied space between the two columns. In this embodiment each seating unit in the plurality of seating units 700 is configured such that the seat is positioned at an acute angle to the longitudinal axis of the aircraft and wasted space is therefore reduced.

The plurality of seating units 700 includes the adjacent seating unit 201 and a second seating unit 701. The two units are arranged such that the adjacent seating unit 201 is positioned between the second seating unit 701 and the stowage unit 200.

In this embodiment, the longitudinal length of each seating unit is 33.2" (84.3 cm) when measured along the aisle of the aircraft (for example from the opening of the footwell 702 of the second seating unit 701 to the front face of the stowage unit 200). This can be seen in Fig. 2.

However, the present disclosure is not limited in this regard and other longitudinal lengths may be used. For example, the longitudinal length of the adjacent seating unit 201 when measured from the opening of the footwell 702 of the second seating unit 701 to the front face of the stowage unit 200 may be up to 200 cm in order to increase the amount of space available to the adjacent seating unit 201 whilst still saving space on the aircraft. In another example, the longitudinal length of the adjacent seating unit 201 may be less than 175 cm in order to further save space on the aircraft. In yet another example, the longitudinal length of the adjacent seating unit 201 may be less than 150 cm in order to further save space on the aircraft.

From Fig. 2 it is apparent that, in embodiments, if at least 33.2" of free space were created in the direction parallel to the longitudinal axis of the aircraft at the end of one of the two columns formed by the plurality of seating units 700 an additional seating unit identical to the adjacent seating unit 201 could be inserted into the column. The seating capacity of the aircraft could therefore be increased by one for every 33.2" of free space created in the direction parallel to the longitudinal axis of the aircraft.

Embodiments of the present disclosure may be defined by the following numbered clauses:
Clause 1 An aircraft stowage unit configured to provide a footwell for an adjacent seating unit.
Clause 2 An aircraft stowage unit according to Clause 1, wherein the aircraft stowage unit comprises an upper section and a lower section, the lower section configured to provide the footwell for the adjacent seating unit.
Clause 3 An aircraft stowage unit according to any preceding Clause, wherein the aircraft stowage unit is a galley unit.
Clause 4 An aircraft stowage unit according to Clause 3, wherein
   the stowage unit comprises a storage unit configured to receive airline carts or containers, or
   the stowage unit is configured to receive a meal preparation unit, or
   the stowage unit is configured to receive a drink preparation unit, or
   the stowage unit comprises a sink, or
   the stowage unit comprises an outside surface facing towards the aisle of the aircraft, the outside surface including a display panel, or
   the stowage unit comprises an outside surface facing towards the aisle of the aircraft, the outside surface including a lighting component, or
   the stowage unit comprises an outside surface facing towards the aisle of the aircraft, the outside surface including a lighting component positioned on the outside surface such that the vertical distance between it and the base of the stowage unit is up to 15 cm, or
   the stowage unit comprises an outside surface facing towards the aisle of the aircraft, the outside surface including an LED strip.
Clause 5 An aircraft stowage unit according to any preceding Clause, wherein the aircraft stowage unit comprises a heated unit.
Clause 6 An aircraft stowage unit according to any preceding Clause, wherein the aircraft stowage unit comprises a refrigerated unit.
Clause 7 An aircraft stowage unit according to any preceding Clause, wherein the length of the stowage unit along the direction parallel to the longitudinal axis of the aircraft is less than 70 cm.
Clause 8 An aircraft stowage unit according to any preceding Clause, wherein the length of the stowage unit along the direction parallel to the longitudinal axis of the aircraft is less than 60 cm.
Clause 9 An aircraft stowage unit according to any preceding Clause, wherein the length of the stowage unit along the direction parallel to the longitudinal axis of the aircraft is less than 50 cm.
Clause 10 An aircraft seating arrangement comprising an aircraft stowage unit according to any preceding Clause and an adjacent seating unit.
Clause 11 An aircraft seating arrangement according to Clause 10, wherein
   the adjacent seating unit comprises a seat including controls for causing the seat to recline to a substantially horizontal position such that it becomes suitable for use as a bed, and
   when the seat is in the substantially horizontal position the footwell forms part of the bed surface.
Clause 12 An aircraft seating arrangement according to Clause 10, wherein
   the adjacent seating unit comprises a seat, and
   the longitudinal axis of the seat is positioned at less than 90 degrees to a front surface of the stowage unit, wherein the front surface of the stowage unit faces towards the adjacent seating unit.
Clause 13 An aircraft seating arrangement according to Clause 10, wherein
   the seating unit comprises a seat, and
   the longitudinal axis of the seat is positioned at less than 90 degrees to the longitudinal axis of the aircraft.
Clause 14 An aircraft seating arrangement according to Clause 10, wherein
   the seating unit is one of a plurality of seating units, and
   the plurality of seating units is arranged such that they form two columns with a single aisle between the two columns.
Clause 15 An aircraft seating arrangement according to Clause 10, wherein
   the aircraft stowage unit is a first aircraft stowage unit,
   the aircraft seating arrangement further comprises a second aircraft stowage unit separate from the first aircraft stowage unit,
   the first aircraft stowage unit comprises a front surface unit that faces away from the second aircraft stowage unit and the second aircraft stowage unit comprises a back surface that faces away from the first aircraft stowage unit, and
   the distance along the direction parallel to the longitudinal axis of the aircraft between the front surface of the first aircraft stowage unit and the back surface of the second aircraft stowage unit is less than 260 cm.
Clause 16 An aircraft seating arrangement according to Clause 10, wherein
   the aircraft stowage unit is a first aircraft stowage unit,
   the aircraft seating arrangement further comprises a second aircraft stowage unit separate from the first aircraft stowage unit,
   the first aircraft stowage unit comprises a front surface that faces away from the second aircraft stowage unit and the second aircraft stowage unit comprises a back surface that faces away from the first aircraft stowage unit, and
   the distance along the direction parallel to the longitudinal axis of the aircraft between the front surface of the first aircraft stowage unit and the back surface of the second aircraft stowage unit is less than 245 cm.
Clause 17 An aircraft seating arrangement according to Clause 10, wherein
   the adjacent seating unit is a first seating unit,
   the aircraft seating arrangement further comprises a second seating unit, and
   the first seating unit is positioned between the second seating unit and the aircraft stowage unit.
Clause 18 An aircraft seating arrangement according to Clause 17, wherein
   the first seating unit and the second seating unit each comprise a seat including controls for causing the seat to recline to a substantially horizontal position such that it becomes suitable for use as a bed, and
   when a seat is in the substantially horizontal position a footwell forms part of the bed surface.
Clause 19 An aircraft seating arrangement according to Clause 17, wherein
   the stowage unit comprises a front surface that faces towards the first seating unit, and
   the distance along the direction parallel to the longitudinal axis of the aircraft between the opening of the footwell of the second seating unit and the front surface of the stowage unit is less than 200 cm.
Clause 20 An aircraft seating arrangement according to Clause 17, wherein
   the stowage unit comprises a front surface that faces towards the first seating unit, and
   the distance along the direction parallel to the longitudinal axis of the aircraft between the opening of the footwell of the second seating unit and the front surface of the stowage unit is less than 175 cm.
Clause 21 An aircraft seating arrangement according to Clause 17, wherein
   the stowage unit comprises a front surface that faces towards the first seating unit, and the distance along the direction parallel to the longitudinal axis of the aircraft between the opening of the footwell of the second seating unit and the front surface of the stowage unit is less than 150 cm.

Numerous modifications and variations of the present disclosure are possible in light of the above teachings. It is therefore to be understood that within the scope of the appended claims, the disclosure may be practiced otherwise than as specifically described herein.

Although the present disclosure has been described in connection with some embodiments, it is not intended to be limited to the specific form set forth herein. Additionally, although a feature may appear to be described in connection with particular embodiments, one skilled in the art would recognize that various features of the described embodiments may be combined in any manner suitable to implement the technique.

Numerous modifications and variations of the present disclosure are possible in light of the above teachings. It is therefore to be understood that within the scope of the appended claims, the disclosure may be practiced otherwise than as specifically described herein.

Although the present disclosure has been described in connection with some embodiments, it is not intended to be limited to the specific form set forth herein. Additionally, although a feature may appear to be described in connection with particular embodiments, one skilled in the art would recognize that various features of the described embodiments may be combined in any manner suitable to implement the technique.

## Claims

1. An aircraft stowage unit configured to provide a footwell for an adjacent seating unit.

2. An aircraft stowage unit according to claim 1, wherein the aircraft stowage unit comprises an upper section and a lower section, the lower section configured to provide the footwell for the adjacent seating unit.

3. An aircraft stowage unit according to any preceding claim, wherein the aircraft stowage unit is a galley unit.

4. An aircraft stowage unit according to claim 3, wherein
the stowage unit comprises a storage unit configured to receive airline carts or containers, or
the stowage unit is configured to receive a meal preparation unit, or
the stowage unit is configured to receive a drink preparation unit, or
the stowage unit comprises a sink, or
the stowage unit comprises an outside surface facing towards the aisle of the aircraft, the outside surface including a display panel, or
the stowage unit comprises an outside surface facing towards the aisle of the aircraft, the outside surface including a lighting component, or
the stowage unit comprises an outside surface facing towards the aisle of the aircraft, the outside surface including a lighting component positioned on the outside surface such that the vertical distance between it and the base of the stowage unit is up to 15 cm, or
the stowage unit comprises an outside surface facing towards the aisle of the aircraft, the outside surface including an LED strip.

5. An aircraft stowage unit according to any preceding claim, wherein the aircraft stowage unit comprises a heated unit.

6. An aircraft stowage unit according to any preceding claim, wherein the aircraft stowage unit comprises a refrigerated unit.

7. An aircraft stowage unit according to any preceding claim, wherein the length of the stowage unit along the direction parallel to the longitudinal axis of the aircraft is less than one of i) 70 cm; ii) 60cm; or iii) 50cm.

8. An aircraft seating arrangement comprising an aircraft stowage unit according to any preceding claim and an adjacent seating unit.

9. An aircraft seating arrangement according to claim 8, wherein i)
the adjacent seating unit comprises a seat including controls for causing the seat to recline to a substantially horizontal position such that it becomes suitable for use as a bed, and
when the seat is in the substantially horizontal position the footwell forms part of the bed surface or ii)
the adjacent seating unit comprises a seat, and
the longitudinal axis of the seat is positioned at less than 90 degrees to a front surface of the stowage unit, wherein the front surface of the stowage unit faces towards the adjacent seating unit; or iii)
the seating unit comprises a seat, and
the longitudinal axis of the seat is positioned at less than 90 degrees to the longitudinal axis of the aircraft or iv)
the seating unit is one of a plurality of seating units, and
the plurality of seating units is arranged such that they form two columns with a single aisle between the two columns.

10. An aircraft seating arrangement according to claim 8, wherein either i)
the aircraft stowage unit is a first aircraft stowage unit,
the aircraft seating arrangement further comprises a second aircraft stowage unit separate from the first aircraft stowage unit,
the first aircraft stowage unit comprises a front surface unit that faces away from the second aircraft stowage unit and the second aircraft stowage unit comprises a back surface that faces away from the first aircraft stowage unit, and
the distance along the direction parallel to the longitudinal axis of the aircraft between the front surface of the first aircraft stowage unit and the back surface of the second aircraft stowage unit is less than 260 cm or ii)
the aircraft stowage unit is a first aircraft stowage unit,
the aircraft seating arrangement further comprises a second aircraft stowage unit separate from the first aircraft stowage unit,
the first aircraft stowage unit comprises a front surface that faces away from the second aircraft stowage unit and the second aircraft stowage unit comprises a back surface that faces away from the first aircraft stowage unit, and
the distance along the direction parallel to the longitudinal axis of the aircraft between the front surface of the first aircraft stowage unit and the back surface of the second aircraft stowage unit is less than 245 cm.

11. An aircraft seating arrangement according to claim 8, wherein
the adjacent seating unit is a first seating unit,
the aircraft seating arrangement further comprises a second seating unit, and
the first seating unit is positioned between the second seating unit and the aircraft stowage unit.

12. An aircraft seating arrangement according to claim 11, wherein
the first seating unit and the second seating unit each comprise a seat including controls for causing the seat to recline to a substantially horizontal position such that it becomes suitable for use as a bed, and
when a seat is in the substantially horizontal position a footwell forms part of the bed surface.

13. An aircraft seating arrangement according to claim 11, wherein
the stowage unit comprises a front surface that faces towards the first seating unit, and
the distance along the direction parallel to the longitudinal axis of the aircraft between the opening of the footwell of the second seating unit and the front surface of the stowage unit is less than 200 cm.

14. An aircraft seating arrangement according to claim 11, wherein
the stowage unit comprises a front surface that faces towards the first seating unit, and
the distance along the direction parallel to the longitudinal axis of the aircraft between the opening of the footwell of the second seating unit and the front surface of the stowage unit is less than 175 cm.

15. An aircraft seating arrangement according to claim 11, wherein
the stowage unit comprises a front surface that faces towards the first seating unit, and
the distance along the direction parallel to the longitudinal axis of the aircraft between the opening of the footwell of the second seating unit and the front surface of the stowage unit is less than 150 cm.
